# FASCICULE DE BREVET EUROPEEN

(11) **EP 0 964 356 B1**
(45) Date de publication et mention de la délivrance du brevet: **20.02.2008**
(21) Numéro de dépôt: 99401379.5
(22) Date de dépôt: 09.06.1999
(51) Int. Cl.: G06K 13/08

(54) **Agencement pour le blocage longitudinal d'un support de données rigide dans un dispositif d'échange de données**
Anordnung zum longitudinalen Blockieren eines starren Datenträgers in einer Datenaustausch-Vorrichtung
Arrangement for longitudinally blocking a rigid data carrier in a device for data exchange

(30) Priorité: 09.06.1998 FR 9807248
(43) Date de publication de la demande: 15.12.1999
(73) Titulaire: VALEO SECURITE HABITACLE S.A.S., 94042 Créteil Cédex (FR); RENAULT S.A.S., 92100 Boulogne Billancourt (FR)
(72) Inventeur: Canard, Louis, 58000 Nevers (FR); Garcin, Philippe, 58180 Marzy (FR)
(74) Mandataire: Kohn, Philippe

(56) Documents cités:
- EP-A- 0 447 906
- FR-A- 2 713 173
- GB-A- 2 157 866
- US-A- 5 043 562

## Description

La présente invention concerne un agencement pour l'échange de données entre un support de données rigide, ou semi-rigide, et un dispositif d'échange de données, notamment de lecture de données contenues dans le support.

L'invention concerne plus particulièrement un tel agencement destiné à équiper un véhicule automobile et dans lequel le support de données, qui est par exemple en forme de carte ou de badge globalement rectangulaire, porte des données d'identification de l'utilisateur du véhicule qui l'autorisent lorsqu'il introduit son badge dans le dispositif de lecture, à utiliser le véhicule en lui permettant notamment de procéder au démarrage du moteur du véhicule.

On connaît de nombreux exemples de tels agencements dans lesquels le support de données est une carte rigide ou semi-rigide comportant par exemple un circuit intégré, ou puce, qui est relié à des moyens de lecture du dispositif par des contacts électriques et/ou par une antenne d'échange de données.

Lors de l'introduction du badge ou de la carte dans le dispositif, celle-ci est introduite manuellement dans un logement du boîtier dans lequel le support de données occupe une position active déterminée, et le dispositif qui reçoit la carte ou le badge comporte des moyens pour retenir longitudinalement ce support de données en position active dans le boîtier de manière que l'échange de données soit assuré dans de bonnes conditions.

Selon la conception la plus répandue, ces moyens de retenue sont constitués par des simples freins, c'est-à-dire qu'il s'agit de pattes déformables élastiquement qui coopèrent par friction avec des bords latéraux et/ou avec les grandes faces de la carte.

Selon une autre conception, par exemple décrite dans le document US-A-5.043.562 considéré comme l'état de la technique le plus proche, l'agencement pour l'échange de données entre un support de données rigide, ou semi-rigide, et un dispositif d'échange de données comporte un boîtier dans lequel le support en forme générale de carte est introduit manuellement dans un logement du boîtier dans lequel il occupe une position active déterminée, et dans lequel le dispositif comporte des moyens pour retenir longitudinalement le support de données en position active dans le boîtier, le support de données comportant une fenêtre, et le boîtier comportant un levier de blocage du support qui est monté pivotant, autour d'un axe, entre une position de blocage vers laquelle le levier de blocage est rappelé élastiquement et dans laquelle un doigt de blocage formé à l'extrémité libre d'un bras du levier de blocage s'étend verticalement à l'intérieur de la fenêtre, et une position escamotée dans laquelle le doigt de blocage est situé hors de la fenêtre pour permettre l'extraction du support de données hors du boîtier.

De telles conceptions des moyens de retenue du support de données dans le dispositif de lecture ne sont pas entièrement satisfaisante dans le cas d'une application à un véhicule automobile dans lequel le dispositif est soumis, lors du roulage, à de nombreuses vibrations qui provoquent progressivement l'éjection du support de données, ou tout au moins son déplacement par rapport à sa position active dite de lecture.

De plus, dans le cas d'une application à un véhicule automobile, il est nécessaire de pouvoir non seulement retenir le support de données en position active, mais aussi le verrouiller en le bloquant dans cette position, en réponse à un ordre de commande de verrouillage, de manière à éviter que dans certaines configurations d'utilisation du véhicule, le conducteur ou un passager puisse extraire inopinément le support de données du dispositif de lecture.

Dans ce but, l'invention propose un agencement pour l'échange de données du type décrit précédemment, caractérisé en ce que le boîtier comporte un électroaimant de verrouillage du levier de blocage dans sa position angulaire de blocage du support de données dont le noyau mobile constitue un doigt de verrouillage qui peut être commandé en saillie à l'extérieur du boîtier de l'électroaimant pour s'étendre en regard d'une partie du levier de blocage afin d'empêcher la rotation de ce dernier de sa position active de blocage vers sa position escamotée.

Selon d'autres caractéristiques de l'invention:
- l'axe de pivotement du levier est parallèle au plan dans lequel est située la direction longitudinale d'introduction du support de données dans le boîtier
- l'axe de pivotement du levier de blocage est perpendiculaire à la direction longitudinale d'introduction du support de données ;
- lors de l'introduction du support de données dans le boîtier, l'escamotage du levier de blocage est commandé par la coopération d'un bord transversal avant du support de données avec un profil de came arrière du doigt de blocage formant rampe et est commandé, lors de l'extraction du support de données, par la coopération d'un bord transversal avant de la fenêtre avec un profil de came avant du doigt de blocage formant rampe ;
- le doigt de blocage présente, en section par un plan longitudinal, un profil en forme de V dont les deux branches constituent les profils de came arrière et avant formant rampes ;
- la longueur de la fenêtre, délimitée par les bords transversaux avant et arrière, correspond sensiblement à la longueur de la partie du doigt de blocage qui est reçue dans la fenêtre lorsque le levier de blocage est dans sa position angulaire de blocage du support de données ;
- les bords transversaux avant et arrière de la fenêtre sont inclinés de manière à présenter, en section longitudinale, un profil en V complémentaire de celui du doigt de blocage ;
- l'axe de déplacement du noyau mobile de l'électroaimant est parallèle à l'axe de pivotement du levier de blocage, et en position de verrouillage du levier de blocage, le noyau mobile s'étend en regard d'une partie du bras qui porte le doigt de blocage ;
- le boîtier comporte une fente longitudinale de guidage du support de données qui est délimitée par une plaque supérieure de guidage au dessus de laquelle est agencé le levier de blocage et qui comporte un trou pour le passage du doigt de blocage ;
- l'agencement équipe un véhicule automobile dont les fonctions d'antivol sont partiellement ou totalement assurées par traitement de données dont certaines, contenues dans le support de données, sont représentatives d'un utilisateur autorisé, ou d'un groupe d'utilisateurs autorisés, du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective avec arrachement partiel qui illustre principalement l'élément structurel interne du boîtier dans un agencement conforme aux enseignements de l'invention en association avec un badge formant support de données qui est illustré dans une position intermédiaire en cours d'introduction dans le boîtier ;
- la figure 2 est une vue similaire à celle de la figure 1 sur laquelle le badge formant support de données est illustré introduit dans le boîtier en position active dans laquelle il est bloqué et verrouillé ;
- la figure 3 est une vue en section longitudinale de l'agencement selon l'invention sur laquelle le badge est illustré en cours d'introduction ;
- la figure 4 est une vue similaire à celle de la figure 3 illustrant une étape suivante de la phase d'introduction du badge dans le dispositif de lecture ; et
- la figure 5 est une vue similaire à celles des figures 3 et 4 dans laquelle, comme à la figure 2, le badge est illustré en position active dans laquelle il est bloqué et verrouillé.

Dans la description qui va suivre, les termes "vertical", "horizontal", "supérieur", "inférieur", "avant", "arrière", etc. sont utilisés en référence aux figures pour faciliter la compréhension de la description et des revendications et ceci à titre non limitatif.

Comme on peut le voir sur les figures, l'agencement 10 réalisé conformément aux enseignements de l'invention est constitué pour l'essentiel par un support de données ou badge 12 et par un dispositif d'échange de données ou boîtier 14.

Le badge 12 est ici un élément rigide de forme générale rectangulaire et d'épaisseur réduite qui comporte, au voisinage de son bord transversal arrière 16, une partie de préhension 18.

Le badge 12 est un support de données qui est susceptible d'être introduit longitudinalement, c'est-à-dire selon la direction I parallèle au plan général de ses grandes faces supérieure 20 et inférieure 22, dans le boîtier 14, et qui est susceptible d'être extrait de ce boîtier selon la même direction mais dans le sens opposé.

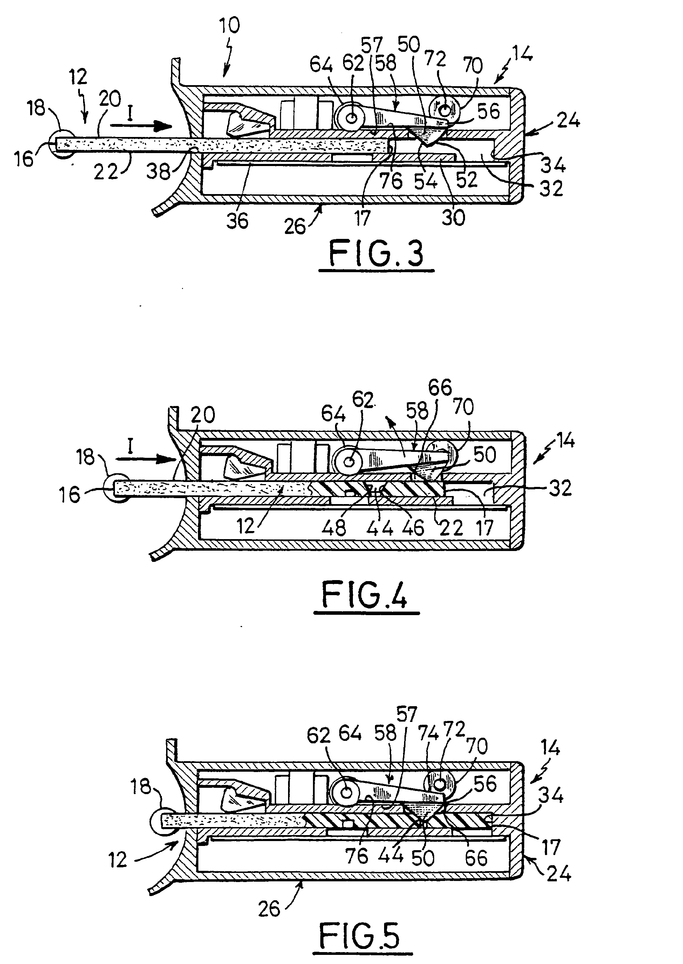

Le boîtier 14, comme on peut le voir plus particulièrement aux figures 3 à 5, est constitué pour l'essentiel par une pièce centrale 24 qui constitue l'armature qui porte les différents composants du boîtier et qui est entourée par une pièce d'habillage 26.

La pièce centrale 24 est constituée pour l'essentiel par deux plaques parallèles supérieure 28 et inférieure 30 qui délimitent verticalement entre elles un logement 32 de forme générale parallélépipédique rectangle complémentaire de celle de la partie avant du badge 12, et qui est délimité longitudinalement vers l'avant, c'est-à-dire vers la droite en considérant les figures, par une face transversale de butée 34 qui détermine la position maximale d'introduction du badge 12 dans le boîtier 14 lorsque le bord transversal avant 17 du badge 12 vient en butée contre cette face transversale 34.

La plaque inférieure 30 porte, sous sa face inférieure, une plaque à circuit imprimé 36 qui porte les différents composants de circuits électroniques (non représentés) appartenant à des moyens de commande et d'échange de données avec celles contenues dans le badge 12 lorsque celui-ci est dans sa position maximale introduite, dite aussi position active ou d'échange de données.

Afin de permettre l'introduction et l'extraction du badge 12 dans le boîtier, la pièce d'habillage 26 comporte une fente 38.

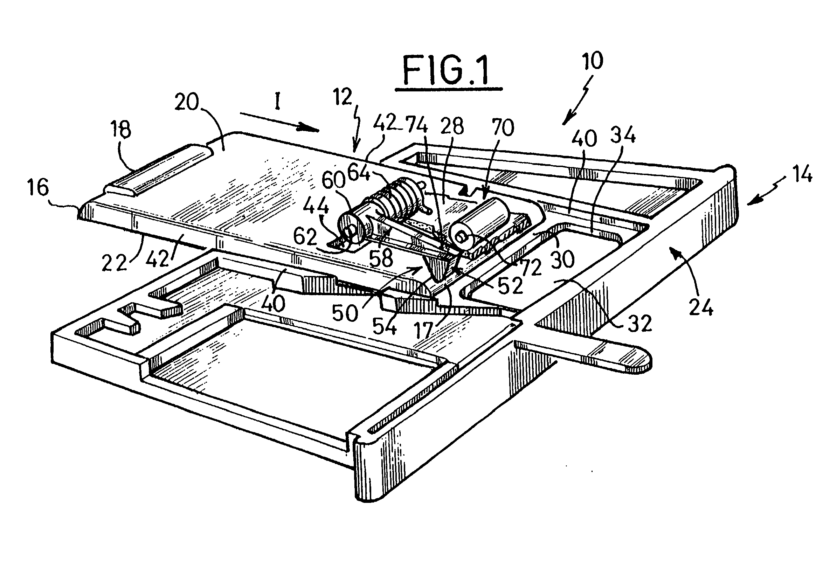

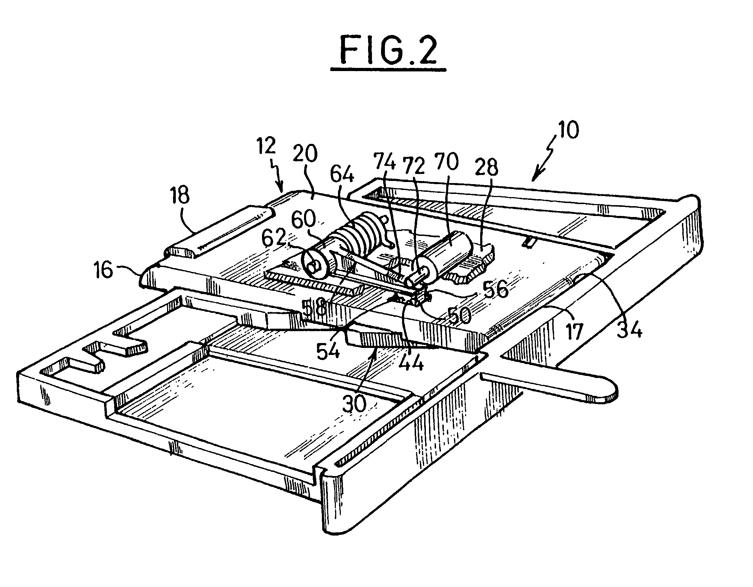

Pour guider en coulissement le badge 12 à l'intérieur du boîtier 14, la plaque inférieure 30 comporte, comme on peut le voir sur les figures 1 et 2, des glissières latérales 40 qui coopèrent avec les bords longitudinaux opposés 42 du badge 12.

Comme on peut le voir sur les figures, le badge 12 comporte dans sa partie avant une fenêtre 44 qui s'étend verticalement dans le badge et qui le traverse ici de part en part.

Plus particulièrement, en section longitudinale et comme on peut le voir notamment aux figures 4 et 5, la fenêtre 44 présente un profil en tronc de V et elle est ainsi délimitée par un bord transversal avant 46 et par un bord transversal arrière 48.

La fenêtre 44 est une fenêtre de blocage, c'est-à-dire qu'elle est destinée à recevoir un organe de blocage appartenant au boîtier 14 et qui va maintenant être décrit en détail en référence aux figures.

L'organe de blocage du badge 12 en position active est un doigt de blocage 50 qui, en section longitudinale et comme on peut le voir sur les figures, présente un profil en forme de V délimité par deux faces inclinées avant 52 et arrière 54 qui sont inclinées l'une par rapport à l'autre selon sensiblement le même angle que celui formé par les bords 46 et 48 de la fenêtre 44.

Le doigt de blocage 50 est formé à l'extrémité libre avant 56 d'un bras 57 d'un levier de blocage 58 dont l'extrémité arrière 60 est un tronçon cylindrique qui est traversé par un axe 62 d'articulation en pivotement du levier 58 de manière à ce que ce dernier soit monté pivotant dans les deux sens autour d'un axe de pivotement 62 qui est perpendiculaire à la direction d'introduction I et parallèle au plan contenant cette dernière, c'est-à-dire parallèle au plan général du badge 12 lorsque celui-ci est introduit dans le logement 32.

Le levier de blocage 58 est rappelé élastiquement en permanence vers sa position de blocage, c'est-à-dire qu'il est sollicité en permanence dans le sens horaire en considérant les figures 3 à 5, par un ressort de rappel 64 qui est ici un ressort en fil enroulé en hélice autour du tronçon arrière 60 du levier 58.

Le doigt de blocage 50 s'étend en regard d'un trou 66 formé en vis-à-vis dans la plaque supérieure 28 de la pièce 24 de manière à pouvoir s'étendre verticalement vers le bas à travers ce trou et à l'intérieur du logement 52.

Conformément aux enseignements de l'invention, l'agencement comporte aussi des moyens de verrouillage du levier de blocage 58 en position bloquée.

Dans le mode de réalisation illustré sur les figures, les moyens de verrouillage sont illustrés schématiquement sous la forme d'un électroaimant 70 dont le noyau mobile (non représenté) est susceptible de commander une tige de verrouillage ou doigt de verrouillage 72 qui est normalement partiellement escamoté à l'intérieur du corps de l'électroaimant 70 (voir figure 1) et qui, en position de verrouillage, fait saillie transversalement vers l'extérieur, c'est-à-dire selon une direction parallèle à l'axe 62 du levier de blocage 58, pour s'étendre au dessus d'une face supérieure 74 de l'extrémité libre 56 du levier de blocage 58.

On décrira maintenant le fonctionnement de l'agencement selon l'invention, notamment en référence aux figures 3 à 5.

Lorsqu'il n'y a pas de badge 12 dans le boîtier 14, le levier de blocage 58, sous l'action du ressort 64, est dans sa position illustrée à la figure 3 dans laquelle une portion de sa patte inférieure 76 est en appui sur la face supérieure de la plaque supérieure 28 et dans laquelle le doigt de blocage 50 s'étend à travers le trou 66 partiellement à l'intérieur du logement 32.

Lorsque l'on introduit un badge 12 selon la direction I dans le logement 32, le bord transversal avant 17 est introduit longitudinalement de la gauche vers la droite en considérant la figure 3.

Le mouvement d'introduction d'arrière en avant se poursuit à partir de la figure 3 jusqu'à ce que le bord transversal avant 17 vienne coopérer avec la face arrière inclinée 54 formant rampe du doigt de blocage 50 pour provoquer le pivotement du levier de blocage 58, dans le sens anti-horaire, et donc l'effacement du doigt de blocage 50 lors de l'introduction du badge 12 pour qu'il occupe temporairement sa position illustrée à la figure 4 dans laquelle le doigt de blocage 50 est en appui sur la portion en vis de la face supérieure 20 du badge 12.

Le mouvement d'introduction du badge 12 dans le logement 52 se poursuit à partir de la position illustrée à la figure 4 jusqu'à ce que, comme cela est illustré à la figure 5, son bord transversal avant 17 vienne en butée contre la face transversale 34 du logement 32.

Dans cette position, et de par la conception et le dimensionnement du boîtier 14 et du badge 12, la fenêtre 44 est en regard du trou 66 et du doigt de blocage 50.

En conséquence, sous l'action du ressort 64, le levier de blocage 58 pivote dans le sens horaire et la partie inférieure du doigt de blocage 50 est reçue verticalement dans la fenêtre de blocage 44.

Dans la position de blocage illustrée à la figure 5, le doigt de blocage 50 retient donc longitudinalement dans les deux sens le badge 12 à l'intérieur du boîtier 14, c'est-à-dire que ce dernier ne risque pas de sortir accidentellement du logement 32 sous l'action des vibrations, l'action de blocage résultant de l'effort appliqué au levier de blocage 58 par le ressort 64 étant suffisante pour s'opposer aux conséquences nuisibles des vibrations.

Pour immobiliser le levier de blocage 58 dans sa position de blocage illustrée à la figure 5, il suffit de provoquer la commande de l'électroaimant 70 afin que son doigt de verrouillage 72 fasse saillie axialement hors du boîtier 70 pour s'étendre, comme on peut le voir notamment à la figure 2, au dessus du levier de blocage 58.

Dans cette position de blocage et de verrouillage, le levier 58 ne peut plus pivoter dans le sens anti-horaire et le doigt 50 ne peut donc plus sortir de la fenêtre 44.

Lors de l'introduction, l'action du ressort 64 et du doigt de blocage 50 procure un effet tactile qui permet à l'utilisateur de détecter un premier point dur correspondant à la venue en contact du bord transversal avant 17 avec le doigt de blocage 50, puis un léger bruit suivi d'un choc également perceptible tactilement lorsque le doigt 50 tombe dans la fenêtre 44.

En vue d'extraire le badge 12 du bord du boîtier 14, et après avoir rétracté le doigt de verrouillage 72, il suffit à l'utilisateur de tirer longitudinalement sur le badge 12 d'avant en arrière.

En effet, du fait de l'effort appliqué au badge 12 par l'utilisateur, le bord transversal avant 46 de la fenêtre 44 coopère avec la face inclinée avant 52 du doigt de blocage 50 formant rampe pour provoquer le pivotement dans le sens anti-horaire du levier de blocage 58 et donc permettre l'escamotage du doigt de blocage 50 à l'encontre de l'effort de rappel appliqué au levier 58 par le ressort 64 aboutissant ainsi dans un premier temps à la position illustrée à la figure 4, puis à la position illustrée à la figure 3, le mouvement d'extraction pouvant être poursuivi librement jusqu'à l'extraction totale du badge 12 hors du boîtier 14.

L'électroaimant 70 avec son doigt de verrouillage 72 peut, le cas échéant, assurer une fonction d'interdiction d'introduction d'un badge 12 dans le boîtier 14.

En effet, en considérant la figure 3, si l'électroaimant 70 est commandé pour faire sortir son doigt de verrouillage 72 avant l'introduction du badge 12, il rend alors impossible tout pivotement du levier de blocage 58 et l'escamotage du doigt de blocage 50 lors de l'introduction du badge 12 est impossible, le doigt de blocage 50 constituant alors une butée fixe interdisant l'introduction complète du badge 12 dans le boîtier 14, cette introduction incomplète étant détectée visuellement par l'utilisateur.

L'invention trouve notamment à s'appliquer à bord d'un véhicule automobile dont les fonctions d'antivol sont partiellement ou totalement assurées par traitement de données dont certaines, contenues dans le support ou badge 12, sont représentatives d'un utilisateur autorisé, ou d'un groupe d'utilisateurs autorisés, du véhicule.

Le traitement des données vise notamment à comparer les données contenues dans le badge 12 avec des données mémorisées à bord du véhicule en vue de permettre l'utilisation autorisée du véhicule, le ou les circuits de traitement assurant la commande totale ou partielle de moyens formant antivol, qu'il s'agisse d'un antivol classique, c'est-à-dire agissant sur la colonne de direction du véhicule, et/ou de moyens empêchant le démarrage du moteur du véhicule et/ou interrompant le fonctionnement du moteur.

## Revendications

1. Agencement (10) pour l'échange de données entre un support de données rigide (12), ou semi-rigide, et un dispositif (14) d'échange de données comportant un boîtier (24, 26) dans lequel le support (12) en forme générale de carte est introduit manuellement dans un logement (32) du boîtier (24) dans lequel il occupe une position active déterminée, et dans lequel le dispositif (14) comporte des moyens pour retenir longitudinalement le support de données (12) en position active dans le boîtier (24), et dans lequel le support de données (12) comporte une fenêtre (44) et le boîtier (24) comporte un levier (58) de blocage du support (12) qui est monté pivotant, autour d'un axe (62), entre une position de blocage vers laquelle le levier de blocage (58) est rappelé élastiquement (64) et dans laquelle un doigt de blocage (50) formé à l'extrémité libre (56) d'un bras du levier de blocage s'étend verticalement à l'intérieur de la fenêtre (44), et une position escamotée dans laquelle le doigt de blocage (50) est situé hors de la fenêtre (44) pour permettre l'extraction du support de données (12) hors du boîtier, **caractérisé en ce que** le boîtier (24) comporte un électroaimant (70) de verrouillage du levier de blocage (58) dans sa position angulaire de blocage du support de données (12) dont le noyau mobile constitue un doigt de verrouillage (72) qui peut être commandé en saillie à l'extérieur du boîtier de l'électroaimant pour s'étendre en regard d'une partie (74) du levier de blocage (58) afin d'empêcher la rotation de ce dernier de sa position active de blocage vers sa position escamotée.

2. Agencement selon la revendication 1, **caractérisé en ce que** l'axe (62) de pivotement du levier de blocage (58) est parallèle au plan dans lequel est située la direction longitudinale (I) d'introduction du support de données dans le boîtier.

3. Agencement selon l'une des revendications 1 ou 2, **caractérisé en ce que** l'axe (62) de pivotement du levier de blocage (58) est perpendiculaire à la direction longitudinale (I) d'introduction du support de données (12).

4. Agencement selon la revendication 3, **caractérisé en ce que**, lors de l'introduction du support de données (12) dans le boîtier (24), l'escamotage du levier de blocage (58) est commandé par la coopération d'un bord transversal avant (17) du support de données (12) avec un profil de came arrière (54) du doigt de blocage (50) formant rampe et est commandé, lors de l'extraction du support de données, par la coopération d'un bord transversal avant (46) de la fenêtre avec un profil de came avant (52) du doigt de blocage (50) formant rampe.

5. Agencement selon la revendication 4, **caractérisé en ce que** le doigt de blocage (50) présente, en section par un plan longitudinal, un profil en forme de V dont les deux branches constituent les profils de came arrière (54) et avant (52) formant rampes.

6. Agencement selon l'une quelconque des revendications précédentes, **caractérisé en ce que** la longueur de la fenêtre, délimitée par les bords transversaux avant (46) et arrière (48), correspond sensiblement à la longueur de la partie du doigt de blocage (50) qui est reçue dans la fenêtre (44) lorsque le levier de blocage (58) est dans sa position angulaire de blocage du support de données (12).

7. Agencement selon la revendication 6, prise en combinaison avec la revendication 5, **caractérisé en ce que** les bords transversaux avant (46) et arrière (48) de la fenêtre sont inclinés de manière à présenter, en section longitudinale, un profil en V complémentaire de celui du doigt de blocage (50).

8. Agencement selon la revendication 3, **caractérisé en ce que** l'axe de déplacement du noyau mobile (72) de l'électroaimant (70) est parallèle à l'axe (62) de pivotement du levier de blocage (58), et **en ce que**, en position de verrouillage du levier de blocage, le noyau mobile (72) s'étend en regard d'une partie (74) du bras qui porte le doigt de blocage.

9. Agencement selon l'une quelconque des revendications précédentes, **caractérisé en ce que** le boîtier comporte une fente longitudinale (32) de guidage du support de données (12) qui est délimitée par une plaque supérieure de guidage (28) au dessus de laquelle est agencé le levier de blocage (58) et qui comporte un trou (66) pour le passage du doigt de blocage (50).

10. Agencement selon l'une quelconque des revendications précédentes, **caractérisé en ce qu'**il équipe un véhicule automobile dont les fonctions d'antivol sont partiellement ou totalement assurées par traitement de données dont certaines, contenues dans le support de données (12), sont représentatives d'un utilisateur autorisé, ou d'un groupe d'utilisateurs autorisés, du véhicule.

## Claims

1. Arrangement (10) for data exchange between a rigid or semi-rigid data carrier (12) and a device (14) for data exchange comprising a housing (24, 26) in which the carrier (12), generally a card, is manually inserted into a recess (32) in the housing (24) where it occupies a predetermined active position, and in which the device (14) comprises means for longitudinally holding the data carrier (12) in said active position inside the housing (24), and in which the data carrier (12) comprises a window (44) and the housing (24) comprises a lever (58), mounted pivotally about a pin (62), for blocking the carrier (12) between a blocking position towards which the blocking lever (58) is resiliently pulled (64) and in which a blocking finger (50) formed at the free end (56) of an arm of the blocking lever extends vertically into the window (44), and a retracted position in which the blocking finger (50) is disposed outside the window (44) in order to allow the data carrier (12) to be extracted from the housing (24), **characterised in that** the housing (24) comprises an electromagnet (70) for locking the blocking lever (58) in its angular position for blocking the data carrier (12), the mobile core of which electromagnet includes a locking finger (72) which can be caused to project from the exterior of the electromagnet housing so as to extend opposite a part (74) of the blocking lever (58) in such a way that the rotation of said lever from its active blocking position to its retracted position is prevented.

2. Arrangement according to claim 1, **characterised in that** the pivot pin (62) of the blocking lever (58) is parallel to the plane in which is situated the longitudinal direction (I) for insertion of the data carrier into the housing.

3. Arrangement according to either claim 1 or claim 2, **characterised in that** the pivot pin (62) of the blocking lever (58) is perpendicular to the longitudinal direction (I) for insertion of the data carrier (12).

4. Arrangement according to claim 3, **characterised in that** when the data carrier (12) is inserted into the housing (24), the retraction of the blocking lever (58) is controlled by the cooperation of a leading transverse edge (17) of the data carrier (12) with a trailing cam section (54) of the blocking finger (50) forming a ramp and, when the data carrier is extracted, is controlled by the cooperation of a leading transverse edge (46) of the window with a leading cam section (52) of the blocking finger (50) forming a ramp.

5. Arrangement according to claim 4, **characterised in that** the blocking finger (50), in a section through a longitudinal plane, has the shape of a V of which the two branches constitute the trailing (54) and leading (52) cam sections forming ramps.

6. Arrangement according to any one of the preceding claims, **characterised in that** the length of the window, delimited by the leading (46) and trailing (48) transverse edges, corresponds substantially to the length of the part of the blocking finger (50) which is received in the window (44) when the blocking lever (58) is in its angular position for blocking the data carrier (12).

7. Arrangement according to claim 6, taken in combination with claim 5, **characterised in that** the leading (46) and trailing (48) transverse edges of the window are inclined so as to have, in a longitudinal section, a V-shape complementary to that of the blocking finger (50).

8. Arrangement according to claim 3, **characterised in that** the displacement axis of the mobile core (72) of the electromagnet (70) is parallel to the pivot pin (62) of the blocking lever (58), and **in that**, in a position for locking the blocking lever, the mobile core (72) extends opposite a part (74) of the arm on which the blocking finger is disposed.

9. Arrangement according to any one of the preceding claims, **characterised in that** the housing comprises a longitudinal slot (32) for guiding the data carrier (12) which is delimited by an upper guiding plate (28) on top of which the blocking lever (58) is arranged and which comprises a hole (66) through which the blocking finger (50) can pass.

10. Arrangement according to any one of the preceding claims, **characterised in that** it is used in a motor vehicle, the anti-theft functions of which are partially or completely fulfilled by data processing, specific data contained in the data carrier (12) being representative of an authorised user or a group of authorised users of the vehicle.

## Patentansprüche

1. Anordnung (10) für den Datenaustausch zwischen einem starren oder halbstarren Datenträger (12) und einer Datenaustauschvorrichtung (14), die ein Gehäuse (24, 26) umfasst, in dem der Träger (12) in allgemeiner Form einer Karte manuell in eine Aufnahme (32) des Gehäuses (24) eingeführt wird, in welcher er eine bestimmte aktive Position einnimmt, und wobei die Vorrichtung (14) Mittel zum longitudinalen Halten des Datenträgers (12) in aktiver Position in dem Gehäuse umfasst, und wobei der Datenträger (12) ein Fenster (44) umfasst und das Gehäuse (24) einen Blockierhebel (58) des Trägers (12) umfasst, der um eine Achse (62) schwenkbar zwischen einer Blockierposition, gegen die der Blockierhebel (58) elastisch (64) zurückgezogen wird und in der sich ein Blockierfinger (50), der an dem freien Ende (56) eines Blockierhebelarms ausgebildet ist, vertikal im Inneren des Fensters (44) erstreckt, und einer eingezogenen Position befestigt ist, in der sich der Blockierfinger (50) außerhalb des Fensters (44) befindet, um das Herausziehen des Datenträgers (12) aus dem Gehäuse zu gestatten, **dadurch gekennzeichnet, dass** das Gehäuse (24) einen Elektromagneten (70) zur Verriegelung des Blockierhebels (58) in seiner Winkelposition zum Blockieren des Datenträgers (12) umfasst, dessen beweglicher Kern einen Verriegelungsfinger (72) bildet, der an der Außenseite des Gehäuses des Elektromagneten vorspringend angeordnet werden kann, so dass er sich relativ zu einem Teil (74) des Blockierhebels (58) erstreckt, um die Drehung des Letzteren aus seiner aktiven Blockierposition in seine eingezogene Position zu verhindern.

2. Anordnung nach Anspruch 1, **dadurch gekennzeichnet, dass** die Schwenkachse (62) des Blockierhebels (58) parallel zu der Ebene verläuft, in der die Längsrichtung (I) der Einführung des Datenträgers in das Gehäuse liegt.

3. Anordnung nach einem der Ansprüche 1 oder 2, **dadurch gekennzeichnet, dass** die Schwenkachse (62) des Blockierhebels (58) senkrecht zu der Längsrichtung (I) der Einführung des Datenträgers (12) verläuft.

4. Anordnung nach Anspruch 3, **dadurch gekennzeichnet, dass** während der Einführung des Datenträgers (12) in das Gehäuse (24) das Einziehen des Blockierhebels (58) durch das Zusammenwirken einer vorderen Querkante (17) des Datenträgers (12) mit einem rückwärtigen Nockenprofil (54) des Blockierfingers (50), das eine Rampe bildet, gesteuert wird, und während des Herausziehens des Datenträgers durch das Zusammenwirken einer vorderen Querkante (46) des Fensters mit einem vorderen Nockenprofil (52) des Blockierhebels (50) gesteuert wird, das eine Rampe bildet.

5. Anordnung nach Anspruch 4, **dadurch gekennzeichnet, dass** der Blockierfinger (50) im Schnitt durch eine Längsebene ein Profil in V-Form aufweist, dessen zwei Schenkel das rückwärtige (54) und vordere (52) Nockenprofil bilden, das Rampen ausbildet.

6. Anordnung nach einem der vorhergehenden Ansprüche, **dadurch gekennzeichnet, dass** die Länge des Fensters, das durch die vordere (46) und die rückwärtige (48) Querkante begrenzt wird, im Wesentlichen der Länge des Teils des Blockierfingers (50) entspricht, der in dem Fenster (44) aufgenommen wird, wenn sich der Blockierhebel (58) in seiner Winkelblockierposition des Datenträgers (12) befindet.

7. Anordnung nach Anspruch 6 in Kombination mit Anspruch 5, **dadurch gekennzeichnet, dass** die vordere (46) und die rückwärtige (48) Querkante des Fensters so geneigt sind, dass sie im Längsschnitt eine komplementäres V zu demjenigen des Blockierfingers (50) aufweisen.

8. Anordnung nach Anspruch 3, **dadurch gekennzeichnet, dass** die Verschiebungsachse des beweglichen Kerns (72) des Elektromagneten (70) parallel zur Schwenkachse (62) des Blockierhebels (58) verläuft, und **dadurch**, dass sich in der Verriegelungsposition des Blockierhebels der bewegliche Kern (72) in Bezug auf einen Teil (74) des Arms erstreckt, der den Blockierfinger trägt.

9. Anordnung nach einem der vorhergehenden Ansprüche, **dadurch gekennzeichnet, dass** das Gehäuse einen Längsschlitz (32) zur Führung des Datenträgers (12) umfasst, der durch eine obere Führungsplatte (28) begrenzt ist, über der der Blockierhebel (58) angeordnet ist und die ein Loch (66) zum Hindurchführen des Blockierfingers (50) aufweist.

10. Anordnung nach einem der vorhergehenden Ansprüche, **dadurch gekennzeichnet, dass** sie in einem Kraftfahrzeug eingerichtet ist, dessen Diebstahlsicherungsfunktionen teilweise oder vollständig durch Verarbeitung von Daten sichergestellt wird, von denen bestimmte, die in dem Datenträger (12) bekannt sind, für einen berechtigten Benutzer oder eine berechtigte Gruppe von Benutzern des Fahrzeugs repräsentativ sind.
